# EUROPEAN PATENT APPLICATION

(11) **EP 4 787 531 A1**
(43) Date of publication of application: **05.08.2026**
(21) Application number: 24870654.1
(22) Date of filing: 23.09.2024
(51) Int. Cl.: H01M 10/058, H01M 50/271, H01M 50/166, H01M 50/15

(54) **MANUFACTURING METHOD FOR HIGH-CAPACITY BATTERY, SEMI-FINISHED SINGLE BATTERY, BATTERY CELL, AND HIGH-CAPACITY BATTERY**

(30) Priority: 28.09.2023 CN 202311273248; 28.09.2023 CN 202311273173; 28.12.2023 CN 202311827947
(71) Applicant: Aurora Power&Energy Holdings Pte. Ltd., Singapore 189652 (SG)
(72) Inventor: LEI, Zhengjun, Xi'an, Shaanxi 710075 (CN); CHEN, Mengqi, Xi'an, Shaanxi 710075 (CN)
(74) Representative: Winter, Brandl - Partnerschaft mbB
(86) International application number: PCT/CN2024/120395
(87) International publication number: WO 2025/067110

(57) **Abstract**

The present invention discloses a manufacturing method for a high-capacity battery, a semi-finished single battery, a battery cell, and a high-capacity battery. The method comprises: manufacturing multiple semi-finished single batteries or battery cells that are not injected with an electrolyte, connecting the semi-finished single batteries or the battery cells in parallel and then placing same in a box body, sealing the box body, and injecting electrolyte into the box body, such that the electrolyte of an inner cavity of each semi-finished single battery or the electrolyte of an inner cavity of each battery cell and the electrolyte in the box body are in one electrolyte system, and then performing a formation operation to complete the manufacturing of the high-capacity battery. Compared with existing high-capacity battery manufacturing methods, processes of liquid injection, sealing, and formation of each single battery are removed. a process of secondary unpacking of each single battery is removed, and high-capacity battery manufacturing efficiency is greatly improved.

## Description

### Technical Field

The present invention relates to the field of batteries, and particularly, to a manufacturing method for a high-capacity battery, a semi-finished single battery, a battery cell, and a high-capacity battery.

### Background

At present, a high-capacity battery (also referred to as a battery module or a battery assembly) available on the market is generally formed by connecting a plurality of single cells in parallel or in series.

An existing high-capacity battery includes a plurality of single cells and a case. Since the single batteries are within a shared electrolyte system, consistency of the single batteries is ensured, thereby enhancing the cycle life of the high-capacity battery. The fabrication process of the high-capacity battery is generally as follows:

### Fabrication of finished single cells

Electrode assemblies are first prepared by winding or stacking and then placed into shells, followed by a first electrolyte injection, sealing, formation, and other procedures of the single cells, thereby completing fabrication of the finished single cells.

### Fabrication of the high-capacity battery

Single cells within the same group are connected in parallel and placed into a case, followed by a second electrolyte injection and formation, thereby completing fabrication of the high-capacity battery.

It can be seen from the method above that in the fabrication of conventional high-capacity batteries, the process first involves electrolyte injection during the fabrication of the single cells, followed by sealing and formation of the single cells. In addition, during the fabrication of the high-capacity battery, each battery cell further undergoes reopening and a second electrolyte injection.

Therefore, it has been found in actual production that fabrication of high-capacity batteries using the method above involves cumbersome processes and high costs.

### Summary

To solve the problems of cumbersome fabrication processes and high costs associated with existing high-capacity batteries, some embodiments of the present invention provide the following three manufacturing methods for high-capacity batteries.

A first manufacturing method includes the following steps:
assembling semi-finished single batteries without electrolyte injected therein, wherein at least one first through hole is disposed in a shell of each semi-finished single battery;
assembling a semi-finished high-capacity battery:
   placing a plurality of semi-finished single batteries into a case, wherein inner cavities of the semi-finished single batteries are in communication with an inner cavity of the case via the first through hole; sealing the case, and connecting electrode terminals of the semi-finished single batteries extending out of the case in parallel, thereby forming the semi-finished high-capacity battery; and
   performing electrolyte injection and formation:
      injecting electrolyte into the semi-finished high-capacity battery such that the single cells are within a unified electrolyte system, followed by formation, thereby completing fabrication of the high-capacity battery.

A second manufacturing method includes the following steps:
assembling semi-finished single batteries without electrolyte injected therein;
assembling a semi-finished high-capacity battery:
   forming first through holes in a shell of each semi-finished single battery either before placing a plurality of semi-finished single batteries into a case or after placing the plurality of semi-finished single batteries into the case, such that an inner cavity of each semi-finished single battery is in communication with an inner cavity of the case, then connecting electrode terminals of the semi-finished single batteries extending out of the case in parallel, followed by sealing the case, thereby forming the semi-finished high-capacity battery; and
   performing electrolyte injection and formation:
      injecting electrolyte into the semi-finished high-capacity battery such that the single cells are within a unified electrolyte system, followed by formation, thereby completing fabrication of the high-capacity battery.

In an embodiment, the first method and the second method described above further include a step of performing vacuum evacuation on the semi-finished high-capacity battery, the purpose of which is to remove impurities from an inner cavity of the case and inner cavities of the semi-finished single batteries, and to further generate negative pressure within the inner cavity of the case and the inner cavities of the semi-finished single batteries.

In an embodiment, the first and second methods described above further include aging the high-capacity battery after formation.

The semi-finished single battery applied in the first manufacturing method includes a shell, a positive electrode terminal, a negative electrode terminal, and an electrode assembly; the positive electrode terminal and the negative electrode terminal are fixed to a top plate of the shell in an insulated manner; a portion of each of the positive electrode terminal and the negative electrode terminal extends out of a top of the shell; another portion of each of the positive electrode terminal and the negative electrode terminal extends into the shell and is connected to the electrode assembly disposed within the shell; no electrolyte is injected into the shell; and a first through hole is disposed in the shell.

In an embodiment, at least one first through hole is disposed in a top of the shell above.

In an embodiment, at least one first through hole is disposed in a bottom or a sidewall of the shell above, and a third through hole is disposed in a top of the shell.

The semi-finished single battery applied in the second manufacturing method includes a shell, a positive electrode terminal, a negative electrode terminal, and an electrode assembly; and
the positive electrode terminal and the negative electrode terminal are fixed to a top plate of the shell in an insulated manner; a portion of each of the positive electrode terminal and the negative electrode terminal extends out of a top of the shell; another portion of each of the positive electrode terminal and the negative electrode terminal extends into the shell and is connected to the electrode assembly disposed within the shell; and no electrolyte is injected into the shell.

In an embodiment, at least one sealed opening mechanism is disposed on the shell above.

In an embodiment, two sealed opening mechanisms described above are provided, one sealed opening mechanism being disposed on a sidewall in a thickness direction of the shell or at a bottom of the shell, and the other sealed opening mechanism being disposed on a top of the shell.

A third manufacturing method includes the following steps:
assembling battery cells:
forming a first through hole in a first cylindrical body having a top opening;
connecting an upper cover assembly and a bare cell by welding to form a cell unit; and
placing the bare cell of the cell unit into the first cylindrical body, and fixing a periphery of the upper cover assembly to a periphery of an open end of the first cylindrical body by partial connection, ensuring that a gap is formed between the periphery of the upper cover assembly and the periphery of the open end of the first cylindrical body, thereby completing fabrication of the battery cells; and
assembling a high-capacity battery:
   placing a plurality of battery cells into a case, ensuring that inner cavities of the battery cells are in communication with an inner cavity of the case via the first through hole, while positive electrode terminals and negative electrode terminals of the battery cells extend out of a top of the case, followed by sealing the case; and
   injecting electrolyte into the case such that the battery cells are within a unified electrolyte system, followed by formation, thereby completing fabrication of the high-capacity battery.

By means of this method, fabrication of the high-capacity battery composed of battery cells may be completed with only a single electrolyte injection. Compared with conventional methods, the steps of electrolyte injection, sealing, and formation of single cells, as well as reopening of the single cells, are reduced, thereby significantly enhancing fabrication efficiency of the high-capacity battery.

Furthermore, during assembly of the battery cells in the present invention, the upper cover assembly is fixed to the open end of the first cylindrical body by partial connection. Compared with conventional single cells for high-capacity batteries in which the upper cover assembly is fully welded to the open end of the first cylindrical body, fabrication time is reduced and fabrication efficiency is enhanced.

In addition, since the upper cover assembly and the open end of the first cylindrical body are connected by partial connection, a gap is formed between the open end of the cylindrical body and the upper cover assembly. During electrolyte injection, gas within the battery cell may be released through the gap. Compared with conventional methods for fabricating high-capacity batteries by reopening of the battery cells, where pressure exists in gas regions of the single cells and results in unsmooth electrolyte injection, this solution effectively avoids such problems.

In an embodiment, the third method above further includes electrically connecting portions of the positive electrode terminals of the battery cells extending out of a top of the case to form an overall positive electrode of the high-capacity battery, and electrically connecting portions of the negative electrode terminals of the battery cells extending out of the top of the case to form an overall negative electrode of the high-capacity battery.

In an embodiment, the third method above further includes, before electrolyte injection, a step of clamping at least one heat exchange pipe onto the overall positive electrode and the overall negative electrode of the high-capacity battery, and drying and heating the battery cells via the heat exchange pipe, and a step of performing vacuum evacuation on an interior of the case after the drying and heating process. During the fabrication of the high-capacity battery, the heat exchange pipe may directly heat the battery cells to control the moisture content within the bare cell. Compared with conventional vacuum baking methods, this eliminates the need for a dedicated vacuum oven, thereby reducing the fabrication cost of the high-capacity battery and enhancing fabrication efficiency of the high-capacity battery. To extract gases generated during drying within the case and to further facilitate electrolyte injection, the method further includes a step of performing vacuum evacuation on an interior of the case during the drying and heating process.

In an embodiment, the third method above may further include aging the high-capacity battery after formation.

The battery cell applied in the third method includes a cell unit and a first cylindrical body; the cell unit includes an upper cover assembly and a bare cell; the upper cover assembly includes a cover plate body, a positive electrode terminal, and a negative electrode terminal; the positive electrode terminal and the negative electrode terminal are fixed to the cover plate body in an insulated manner; a portion of each of the positive electrode terminal and the negative electrode terminal extends out of one side of the cover plate body, and another portion of each of the positive electrode terminal and the negative electrode terminal extends out of another side of the cover plate body and is connected to the bare cell; a top of a first cylindrical body is open, and first through holes are formed in a sidewall or a bottom of the first cylindrical body; and the bare cell is located within the first cylindrical body, and an edge of the cover plate body and a periphery of an open end of the first cylindrical body are fixed by partial connection such that a gap is formed between the open end of the first cylindrical body and the upper cover assembly.

The battery cells applied in the third method, compared with the single cells used in conventional high-capacity batteries, do not require an electrolyte injection portion and do not undergo electrolyte injection or formation operations. Furthermore, the upper cover assembly only needs to be spot-welded to the cylindrical body, eliminating the need for airtightness testing of the battery cells. Therefore, the battery cells have a simpler structure and a streamlined fabrication process, reducing the cost of the battery cells and, in turn, lowering the fabrication cost of the high-capacity battery.

In an embodiment, the positive electrode terminal and the negative electrode terminal described above are provided with mounting portions configured for mounting heat exchange pipes.

The high-capacity battery fabricated by the third method includes a case and a plurality of battery cells described above; a first interface is disposed in the case; second through holes for positive electrode terminals and negative electrode terminals of the battery cells to extend therethrough are disposed in a top of the case; the battery cells are placed side by side within the case, and the positive electrode terminals and the negative electrode terminals of the battery cells extend through the corresponding second through holes, with the second through holes being sealed with the corresponding positive electrode terminals or negative electrode terminals of the battery cells; portions of the positive electrode terminals of the battery cells extending out of the second through holes are electrically connected to form an overall positive electrode of the high-capacity battery, and portions of the negative electrode terminals of the battery cells extending out of the second through holes are electrically connected to form an overall negative electrode of the high-capacity battery; and the battery cells are in communication with an interior of the case via first through holes in a cylindrical body, such that the battery cells are within a shared electrolyte system.

In an embodiment, in the high-capacity battery above, the case includes a housing and end plates fixedly sealed at two ends of the housing, and the first interface is disposed in the end plate. The first interface may be connected to an electrolyte injection and replacement device for performing electrolyte injection or replacement on the high-capacity battery, or it may be connected to a vacuum device to perform vacuum evacuation on the high-capacity battery. Alternatively, an explosion vent valve may be disposed, or a sealed plug may be disposed.

In an embodiment, in the high-capacity battery above, the case further includes a second interface, the second interface being disposed at a position in the end plates close to a top of the case or being disposed in the top of the case. The second interface may be provided with a vent valve, which may periodically release gases generated within the high-capacity battery during operation, thereby reducing the likelihood of swelling in the battery cells and further lowering the risk of thermal runaway in the high-capacity battery.

In an embodiment, the overall positive electrode and the overall negative electrode described above perform heat exchange with an external temperature control apparatus via at least one heat transfer pipe.

Compared with the prior art, the advantageous effects of the present invention are as follows:
1. In the first manufacturing method and the second manufacturing method of the present invention, the semi-finished high-capacity battery is assembled from semi-finished single batteries without electrolyte injection. Subsequent operations such as vacuum evacuation, electrolyte injection, formation, and the like are performed on the semi-finished high-capacity battery. Compared with conventional methods, the steps of electrolyte injection, sealing, and formation of single cells, as well as reopening of the single cells, are reduced, thereby significantly enhancing fabrication efficiency of the high-capacity battery.
2. In the first manufacturing method and the second manufacturing method of the present invention, a vacuum evacuation step is performed on the semi-finished high-capacity battery before electrolyte injection. This step removes any impurities that may have been introduced during sealing of the case (typically by welding). Furthermore, after vacuum evacuation, the inner cavity of the case and the inner cavities of the semi-finished single batteries are under negative pressure, which ensures smooth entry of electrolyte into the inner cavity of the case and the inner cavities of the semi-finished single batteries during subsequent electrolyte injection, thereby ensuring the performance of the fabricated high-capacity battery.
3. In the first manufacturing method of the present invention, a first through hole is pre-formed directly on the shell of the semi-finished single battery. Compared with the use of finished single cells in conventional methods, this reduces the need for a sealed opening mechanism for reopening. Moreover, a third through hole is directly disposed in the top of the shell, reducing the use of explosion vent membranes compared with conventional finished single cells, and further lowering the fabrication cost.
4. In the present invention, the high-capacity batteries obtained by the first manufacturing method and the second manufacturing method may be provided with, on the top of the case, a second channel that is in communication with the gas regions within the inner cavities of the single cells. This second channel may ensure that the gas pressure within the single cells remains in a balanced system, so the single cells are under the same pressure. This reduces differences among single cells caused by inconsistent internal gas pressure. Moreover, a vent valve is disposed on the second channel to periodically release gas from the single cells, avoiding the occurrence of problems such as swelling of the housings of the single cells and other problems that may adversely affect the overall performance of the high-capacity battery due to gas entrapment.
5. In the present invention, a second channel may be disposed on the top of the case, covering the explosion vent portions of the single cells. In the event of a single cell undergoing thermal runaway, the explosion vent portion opens, and the thermal runaway gases are discharged through the second channel to an external thermal runaway gas treatment apparatus, thereby ensuring the safety of the high-capacity battery.

### Brief Description of the Drawings

To more clearly illustrate the technical solutions of embodiments of the present invention or of the prior art, the drawings required for describing the embodiments or the prior art are briefly introduced below. It is apparent that the drawings described below merely illustrate some embodiments of the present invention, and that other drawings may also be obtained according to these drawings by a person of ordinary skill in the art without creative efforts.
FIG. 1 is a flowchart of a manufacturing method for a high-capacity battery according to Embodiment 1 and Embodiment 2;
FIG. 2 is a schematic structural diagram of a first type of semi-finished single battery according to Embodiment 1;
FIG. 3 is a schematic structural diagram of a second type of semi-finished single battery according to Embodiment 1;
FIG. 4 is a schematic structural diagram of a high-capacity battery having only a first channel;
FIG. 5 is a schematic structural diagram of a case of a high-capacity battery shown in FIG. 4;
FIG. 6 is a schematic structural diagram of a high-capacity battery having a first channel and a second channel;
FIG. 7 is a schematic structural diagram of a case of a high-capacity battery shown in FIG. 6;
FIG. 8 is a schematic structural diagram of a first type of semi-finished single battery according to Embodiment 2;
FIG. 9 is a schematic structural diagram of a second type of semi-finished single battery according to Embodiment 2;
FIG. 10 is a schematic structural diagram of a third type of semi-finished single battery according to Embodiment 2;
FIG. 11 is a flowchart of a manufacturing method for a high-capacity battery according to Embodiment 3;
FIG. 12 is a flowchart illustrating Step 1 of assembling battery cells according to Embodiment 3;
FIG. 13 is a flowchart illustrating Step 1 of assembling a high-capacity battery according to Embodiment 3;
FIG. 14 is a first schematic structural diagram of a battery cell according to Embodiment 3;
FIG. 15 is a second schematic structural diagram of a battery cell according to Embodiment 3;
FIG. 16 is a schematic structural diagram of a battery cell with grooves according to Embodiment 3;
FIG. 17 is a schematic structural diagram of a battery cell with through openings according to Embodiment 3;
FIG. 18 is a schematic structural diagram of a high-capacity battery according to Embodiment 3;
FIG. 19 is a schematic structural diagram of a top of a case according to Embodiment 3; and
FIG. 20 is a cross-sectional view of a high-capacity battery according to Embodiment 3.

The reference numerals are as follows:
100. Semi-finished single battery; 200. High-capacity battery; 300. Battery cell;
1. Shell; 2. Positive electrode terminal; 3. Negative electrode terminal; 4. First through hole; 5. First cylindrical body; 6. Upper cover plate; 7. Lower cover plate; 8. Groove; 9. Case; 10. Single cell; 11. Second through hole; 12. Electrode terminal adapter member; 13. Hollow component; 14. Second cylindrical body; 15. First cover plate; 16. Second cover plate; 17. First channel; 18. Second channel; 19. Third cover plate; 20. Fourth cover plate; 21. Third through hole; 22. Sealed opening mechanism; 23. Upper cover assembly; 24. Bare cell; 25. Cell unit; 26. Heat exchange pipe; 27. Cover plate body; 28. First groove; 29. Through opening; 30. First interface; 31. Second interface; 32. Spacer plate; 33. Electrolyte channel; 34. Hollow component.

### Detailed Description of the Embodiments

To make the objects, features, and advantages described above of the present invention more apparent and understandable, a detailed description of the specific implementations of the present invention is provided below with reference to the drawings. It is apparent that the described embodiments are part of the embodiments of the present invention, rather than all of the embodiments. All other embodiments obtained by a person of ordinary skill in the art on the basis of the embodiments in the present invention without creative work shall fall within the scope of protection of the present invention.

The following description provides many specific details to facilitate a comprehensive understanding of the present invention. However, the present invention may be implemented in other ways not specifically described herein. A person skilled in the art may make similar modifications or extensions without departing from the scope of the present invention. Therefore, the present invention is not limited to the specific embodiments disclosed below.

In the description of the present invention, it is to be noted that the terms "top", "bottom", and the like refer to orientations or positional relationships on the basis of orientations or positional relationships shown in the drawings. These terms are used merely to simplify and facilitate the description of the present invention, and are not intended to indicate or imply that the referenced apparatuses or elements have a specific orientation or be constructed and operated in a specific orientation. Therefore, such terms cannot be construed as limitations of the present invention. In addition, the terms "first", "second", "third", "fourth", and the like are used solely for descriptive purposes are not to be construed as indicating or implying relative importance.

The basic design concept of the present invention is as follows:
A plurality of semi-finished single batteries or battery cells without electrolyte injected therein, are fabricated and then connected in parallel before being placed into a case. The case is sealed, and electrolyte is injected into the case such that the electrolyte in inner cavities of the semi-finished single batteries or the electrolyte in inner cavities of the battery cells is within a unified electrolyte system with the electrolyte within the case. A formation operation is then performed to complete the fabrication of the high-capacity battery. Compared with the conventional manufacturing method for a high-capacity battery, the processes of electrolyte injection, sealing, and formation of the single cells, as well as reopening of the single cells, are reduced, thereby significantly enhancing fabrication efficiency of the high-capacity battery.

### Embodiment 1

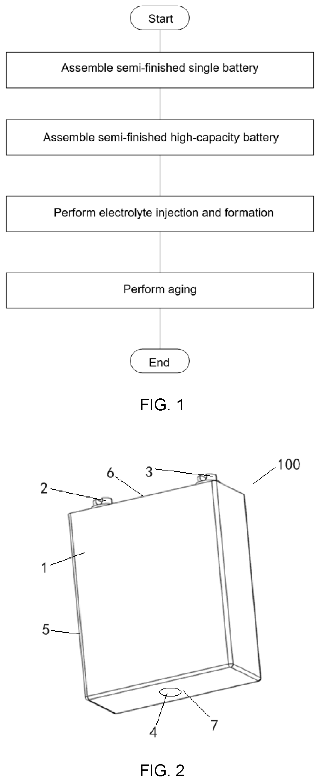

The specific implementation process of the manufacturing method for a high-capacity battery provided in this embodiment is as follows, as shown in FIG. 1:
In step 1, semi-finished single batteries without electrolyte injected therein are assembled.

The semi-finished single batteries are substantially the same as commercially available aluminum prismatic lithium-ion cells, except that the semi-finished single batteries have no electrolyte injected and each semi-finished single battery is provided with at least one first through hole.

In step 2, a semi-finished high-capacity battery is assembled, including:
placing a plurality of semi-finished single batteries into a case, wherein inner cavities of the semi-finished single batteries are in communication with an inner cavity of the case via the first through hole; sealing the case, and connecting electrode terminals of the semi-finished single batteries extending out of the case in parallel, thereby forming the semi-finished high-capacity battery.

In this step, the process of sealing the case ensures that the interior of the case is isolated from the external environment. Therefore, in practice, at least the following two regions need to be sealed:
1. When the semi-finished single batteries are placed into the case, the case necessarily has an open end. Therefore, after all the semi-finished single batteries are placed into the case, the open end needs to be sealed.
2. Since the electrode terminals of the semi-finished single batteries in the semi-finished high-capacity battery are required to extend out of the top of the case, the region on the top of the case through which the electrode terminals extend also needs to be sealed.

In step 3, injection and formation are performed, including:
injecting electrolyte into the case such that the single cells are within a unified electrolyte system, followed by formation, thereby completing fabrication of the high-capacity battery.

In this process, the specific formation method is as follows:
The battery is charged at a constant current of 0.1C to 3.4 V, followed by switching to constant-voltage charging at 3.4 V until a cut-off current reaches 0.01C, and further standing for 30 minutes.

The battery is subsequently discharged at a constant current of 0.1C to 2.5 V, followed by standing for 30 minutes.

The battery is charged again at a constant current of 0.2C to 3.4 V, followed by switching to constant-voltage charging at 3.4 V until a cut-off current reaches 0.01C, and further standing for 30 minutes. Through the formation process, each single cell in the high-capacity battery forms a more stable SEI film, thereby enabling the high-capacity battery to exhibit more stable cycling performance.

Steps 1 to 3 described above are required to be performed in a specific environment, which is preferably an environment having a dew point ranging from -25°C to 40°C, a humidity of ≤ 1%, a temperature of 23°C ± 2°C, and a cleanliness level of Class 100,000.

In a preferred solution of the method above, a vacuum evacuation step is further performed on the semi-finished high-capacity battery before electrolyte injection and formation.

Since impurities may be introduced during the sealing process of the case (generally performed by welding), and such impurities may adversely affect the performance of the high-capacity battery, the vacuum evacuation process may remove impurities from the inner cavity of the case and the inner cavities of the semi-finished single batteries. Furthermore, after vacuum evacuation, the inner cavity of the case and the inner cavities of the semi-finished single batteries are under negative pressure, which ensures smooth entry of electrolyte into the inner cavity of the case and the inner cavities of the semi-finished single batteries during subsequent electrolyte injection.

It is to be noted that the interface used for vacuum evacuation and the interface used for electrolyte injection in Step 3 may be the same interface on the case, or may be two separate interfaces.

In some embodiments, after formation, the high-capacity battery may further undergo an aging treatment at 50°C for 48 hours. After aging, a degassing treatment may optionally be performed on the high-capacity battery to discharge gases generated during formation, thereby reducing the likelihood of swelling of the single cells in the high-capacity battery.

### Semi-finished single battery

As shown in FIG. 2, the semi-finished single battery 100 includes a shell 1 and an electrode assembly disposed in an inner cavity of the shell. The electrode assembly is formed by sequentially stacking a positive electrode, a separator, and a negative electrode, and is assembled by a stacking or winding process. The positive electrode of the electrode assembly is connected to a positive electrode terminal 2 on the top of the shell, and the negative electrode of the electrode assembly is connected to a negative electrode terminal 3 on the top of the shell. No electrolyte is injected into the inner cavity of the shell. The shell is provided with at least one first through hole 4 (the number of the first through holes may be two or more, or a first through hole with a relatively large aperture may be disposed).

In some embodiments, the first through hole 4 may be disposed in a bottom or a sidewall of the shell and is configured for electrolyte injection and vacuum evacuation during assembly of the high-capacity battery.

In some embodiments, the first through hole 4 may be disposed in the top of the shell and is configured for electrolyte injection, vacuum evacuation, degassing, and explosion vent during assembly of the high-capacity battery.

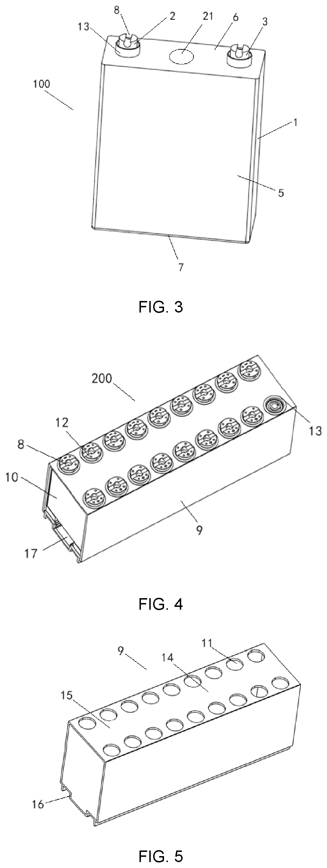

As shown in FIG. 3, the second type of semi-finished single battery 100 includes a shell 1 and an electrode assembly disposed in an inner cavity of the shell. The electrode assembly is formed by sequentially stacking a positive electrode, a separator, and a negative electrode, and is assembled by a stacking or winding process. The positive electrode of the electrode assembly is connected to a positive electrode terminal 2 on the top of the shell, and the negative electrode of the electrode assembly is connected to a negative electrode terminal 3 on the top of the shell. No electrolyte is injected into the inner cavity of the shell. At least one first through hole (the number of the first through holes may be two or more, or a first through hole with a relatively large aperture may be disposed) is disposed in the side or bottom of the shell, and a third through hole 21 is disposed in the top of the shell.

The first through hole 4 is configured for electrolyte injection and vacuum evacuation during assembly of the high-capacity battery, whereas, the third through hole 21 is configured for degassing and explosion vent during assembly of the high-capacity battery.

Since the two types of semi-finished single batteries described above each have at least one first through hole 4, it is necessary, before assembling the semi-finished single batteries into a high-capacity battery or during storage and transportation, to ensure that the electrode assemblies of the semi-finished single batteries are not corroded by the external environment. Therefore, the first through hole (and the third through hole) of the semi-finished single batteries may be sealed by film heat sealing.

If film heat sealing is not employed, the storage area for the semi-finished single batteries is required to be maintained in a specific environment, and during transportation, the semi-finished single batteries are to be placed in a transport container that provides the same specific environment.

To further enhance the fabrication efficiency of the high-capacity battery, a preferred method is to sequentially assemble the semi-finished single batteries and the semi-finished high-capacity battery within a cleanroom providing the specific environment described above.

In addition, the shells of the two types of semi-finished single batteries described above each have two structural configurations, as shown in FIGS. 2 to 4.

The first type of shell 1 includes a first cylindrical body 5 and an upper cover plate 6. The first cylindrical body 5 has an upper open end and a lower closed end. During assembly of the semi-finished single battery, the positive electrode terminal and the negative electrode terminal of the upper cover plate 6 are first connected to the positive electrode and the negative electrode of the electrode assembly, respectively. The upper cover plate 6, together with the electrode assembly, is then placed as a single unit into the first cylindrical body through the upper open end of the first cylindrical body. Finally, the upper cover plate 6 is welded to the open end of the first cylindrical body 5.

The second type of shell includes a first cylindrical body 5, an upper cover plate 6, and a lower cover plate 7. The first cylindrical body 5 has both upper and lower ends open. During assembly of the semi-finished single battery, the lower cover plate 7 is first welded to the lower open end of the first cylindrical body. Then, the positive electrode terminal and the negative electrode terminal of the upper cover plate 6 are connected to the positive electrode and the negative electrode of the electrode assembly, respectively. Next, the upper cover plate 6, together with the electrode assembly, is placed as a single unit into the first cylindrical body through the upper open end of the first cylindrical body 5. Finally, the upper cover plate 6 is welded to the upper open end of the first cylindrical body 5.

It is to be emphasized that the shell of the semi-finished single battery is made of aluminum, that is, the first cylindrical body 5, the upper cover plate 6, and the lower cover plate 7 are all fabricated from aluminum.

Furthermore, at least one first through hole 4 and one third through hole 21 are pre-formed in the first cylindrical body 5, the upper cover plate 6, and the lower cover plate 7 before assembling the semi-finished single battery.

In other embodiments, grooves 8 for clamping a heat transfer pipe may be formed in the positive electrode terminal and the negative electrode terminal of the semi-finished single battery 100, or electrode terminal adapter members may be disposed on the positive electrode terminal and the negative electrode terminal, with the grooves 8 formed in the electrode terminal adapter members. The heat transfer pipe may be a liquid cooling pipe or a heat pipe, configured to conduct current from the positive electrode terminal and the negative electrode terminal. Therefore, it is necessary to ensure that the heat transfer pipe itself and the medium inside the heat transfer pipe are insulated from external equipment.

### High-capacity battery

On the basis of the description above of the structure of the semi-finished single battery 100, the structure of the high-capacity battery 200 assembled using the method above and the semi-finished single batteries is described below:
As shown in FIG. 4, the high-capacity battery 200 includes a case 9 and N single cells 10. The N single cells 10 are disposed in parallel within the case 9. First through holes are disposed in a shell 1 of each single cell. Electrolyte injection ports (not shown in the drawing) are disposed in the case 9. Second through holes 11 for positive electrode terminals and negative electrode terminals of the battery cells 10 to extend therethrough are disposed on a top of the case 9, and the top region of the case 9 corresponding to each second through hole 11 is fixedly sealed to the top of the shell of the single cell 10 corresponding to the second through hole 11. The electrolyte in each single cell 10 is in communication with the electrolyte within the case 9, such that the battery cells are within a shared electrolyte system.

In this embodiment, since the positive electrode terminal and the negative electrode terminal of the single cells 10 extend through the top of the case, a heat transfer pipe may be disposed on the grooves 8 of the positive electrode terminals of all the single cells 10, and another heat transfer pipe may be disposed on the grooves 8 of the negative electrode terminals of all the single cells. An external temperature control apparatus is connected to two heat transfer pipes, enabling temperature control of the high-capacity battery (i.e., heating or cooling the high-capacity battery).

It is to be noted that the positive electrode terminal and the negative electrode terminal described above, in which the grooves 8 are formed, may be the electrode terminals of the semi-finished single batteries themselves, or an electrode terminal adapter member 12 fixedly connected to the electrode terminals, with the grooves formed in the electrode terminal adapter member 12.

In this embodiment, the case 9 is made of aluminum.

A top region of the case corresponding to each second through hole described above and the top of the shell of the single cell corresponding to the second through hole may be fixedly sealed in either of the following two methods:
1. A sealing connector is additionally disposed between the top region of the case 9 corresponding to the second through hole 11 and the upper cover plate of the single cell 10 corresponding to the second through hole to achieve sealing. Referring to FIGS. 2 and 4, the sealing connector includes a hollow component 13, the bottom of the hollow component 13 is configured for sealing connection to a first region of the single cell 10, and the top of the hollow component 13 is configured for sealing connection to a second region of the case 9. The first region is the region surrounding any electrode terminal on the upper cover plate of any single cell 10, and the second region is the region on the top of the case 9 corresponding to any second through hole 11. The region corresponding to the second through hole 11 is the region on the outer surface of the case 9 surrounding any second through hole 11, or the region corresponding to the second through hole 11 is the wall of the second through hole. The region surrounding the electrode terminal is the region surrounding an insulating sealing gasket on the electrode terminal. The insulating sealing gasket is a component on the single cell configured to insulate the electrode terminal from the upper cover plate of the single cell.
2. The region of the case 9 surrounding the second through hole 11 may be directly fixedly sealed to the region of the upper cover plate surrounding the electrode terminal of the single cell by laser welding. This method is generally used when the single cells within the case have relatively consistent dimensions in the height direction.

The case structure may have the following configurations:
1. Referring to FIGS. 3 and 4, the case 9 includes a second cylindrical body 14 and a second cover plate 16. The top and bottom of the second cylindrical body 14 are open, with a first cover plate 15 hermetically sealed (welded) to the top of the second cylindrical body 14, and the second cover plate 16 sealingly fixed (welded) to the bottom of the second cylindrical body 14. 2N second through holes 11 are formed in the first cover plate 15.

In some embodiments, when only the first through hole is disposed in the shell of the single cell, to allow the electrolyte to smoothly enter the case 9 and the inner cavities of the semi-finished single batteries 100 during the electrolyte injection, a first channel 17 extending along the arrangement direction of the single cells and corresponding to the first through holes in the shell of the single cell may be formed on the sidewall of the second cylindrical body 14 along the length direction, or on the first cover plate 15, or on the second cover plate 16, according to the positions of the first through holes in the shell of the single cell 10. When the first channel 17 is provided, the electrolyte injection port is disposed in the region of the case 9 corresponding to either end of the first channel 17, and the electrolyte injection port may simultaneously serve as an interface for a vacuum device and an electrolyte injection device.

In particular,
when the first through hole 4 is formed in the lower cover plate or the sidewall of the single cell, correspondingly, a first channel 17, in communication with the first through holes of the single cells, is disposed on the second cover plate 16 or the sidewall of the second cylindrical body 14. The first channel 17 serves the following two functions:
(1) During vacuuming, it facilitates the removal of impurities.
(2) During electrolyte injection, it allows the electrolyte to flow more smoothly into the inner cavities of the single cells and the case, thereby enhancing the continuity of the electrolyte within the shared electrolyte system (avoiding interruptions in electrolyte flow).

When the first through hole 4 is formed in the upper cover plate of the single cell 10, correspondingly, a first channel 17, in communication with the first through holes 4 of the single cells, is disposed on the first cover plate 15. The first channel 17 serves the following four functions:
(1) During vacuuming, it facilitates the removal of impurities.
(2) During electrolyte injection, it allows the electrolyte to flow more smoothly into the inner cavities of the single cells and the case, thereby enhancing the continuity of the electrolyte within the shared electrolyte system (avoiding interruptions in electrolyte flow).
(3) After assembly of the high-capacity battery, the electrolyte in the single cells and in the case settles under gravity to the bottom of the inner cavities of the single cells and the bottom of the case. Therefore, the first channel may serve as a gas channel during aging or operation, allowing the single cells to exist within a gas equilibrium system. From a pressure perspective, this enhances the uniformity of the single cells, thereby further enhancing the cycling performance of the high-capacity battery. Furthermore, since the internal pressures of the single cells are substantially equal, the risk of thermal runaway in any single cell due to excessive internal pressure is greatly reduced, enhancing the safety of the high-capacity battery. If a vent valve is additionally disposed on the first channel, periodic opening of the vent valve may further reduce the likelihood of swelling in the single cells. The vent valve may also be opened after aging of the high-capacity battery to discharge gases generated during the aging process, thereby further extending the cycle life of the high-capacity battery.
(4) An explosion vent valve may be disposed on the first channel. In the event that any single cell undergoes thermal runaway, thermal runaway gases may be discharged through the first through hole and the first channel to an external thermal runaway gas treatment apparatus for timely treatment, thereby reducing the likelihood of more severe accidents.

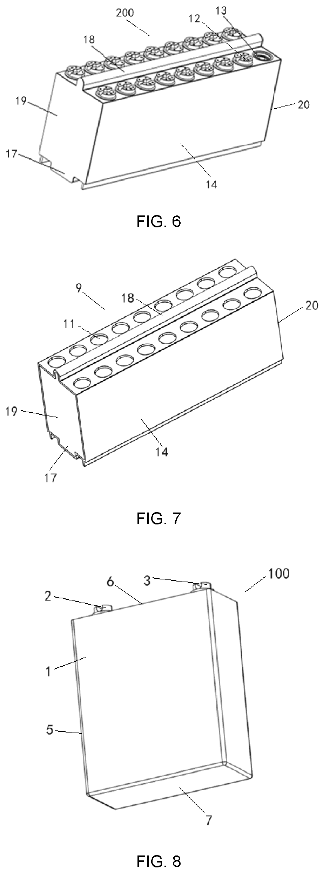

Referring to FIGS. 5 and 6, in some embodiments, when the first through hole of the single cell is formed in the sidewall or the bottom of the single cell, in order to simultaneously achieve the functions (1), (2), (3), and (4) described above, a third through hole 21 may further be disposed in the top of the single cell. Accordingly, a second channel 18 may further be disposed on the first cover plate 15, and the 2N second through holes 11 are arranged in two sides of the second channel 18. In this embodiment, the first channel performs functions (1) and (2), and the second channel performs functions (3) and (4).

2. Referring to FIGS. 6 and 7, the case 9 includes a second cylindrical body 14, a third cover plate 19, and a fourth cover plate 20. Both the front portion and the rear portion of the second cylindrical body 14 are open. The third cover plate 19 is hermetically sealed (welded) to the front portion of the second cylindrical body 14, and the fourth cover plate 20 is hermetically sealed (welded) to the rear portion of the second cylindrical body 14. 2N second through holes 11 are formed in the top of the second cylindrical body 14.

In some embodiments, when only one first through hole is disposed in the shell of the single cell, to allow the electrolyte to smoothly enter the case 9 and the inner cavities of the semi-finished single batteries 100 during the electrolyte injection, a first channel 17 extending along the arrangement direction of the single cells and corresponding to the first through holes in the shell of the single cell 10 may be formed on the top, bottom, or sidewall of the second cylindrical body 14, according to the positions of the first through holes in the shell of the single cell. When the first channel 17 is provided, the electrolyte injection port is disposed in an end plate corresponding to either end of the first channel 17, and the electrolyte injection port may simultaneously serve as an interface for a vacuum device and an electrolyte injection device.

In particular,
referring to FIGS. 3 and 4, when the first through hole 4 is formed in the lower cover plate or the sidewall of the single cell, correspondingly, a first channel 17, in communication with the first through holes 4 of the single cells, is disposed at the bottom or on the sidewall of the second cylindrical body 14. The first channel 17 serves the following two functions:
(1) During vacuuming, it facilitates the removal of impurities.
(2) During electrolyte injection, it allows the electrolyte to flow more smoothly into the inner cavities of the single cells and the case, thereby enhancing the continuity of the electrolyte within the shared electrolyte system (avoiding interruptions in electrolyte flow).

When the first through hole is formed in the upper cover plate of the single cell, correspondingly, a first channel, in communication with the first through holes of the single cells, is disposed on the top of the second cylindrical body. The first channel serves the following four functions:
(1) During vacuuming, it facilitates the removal of impurities.
(2) During electrolyte injection, it allows the electrolyte to flow more smoothly into the inner cavities of the single cells and the case, thereby enhancing the continuity of the electrolyte within the shared electrolyte system (avoiding interruptions in electrolyte flow).
(3) After assembly of the high-capacity battery, the electrolyte in the single cells and in the case settles under gravity to the bottom of the inner cavities of the single cells and the bottom of the case. Therefore, the first channel may serve as a gas channel during aging or operation, allowing the single cells to exist within a gas equilibrium system. From a pressure perspective, this enhances the uniformity of the single cells, thereby further enhancing the cycling performance of the high-capacity battery. Furthermore, since the internal pressures of the single cells are substantially equal, the risk of thermal runaway in any single cell due to excessive internal pressure is greatly reduced, enhancing the safety of the high-capacity battery. If a vent valve is additionally disposed on the first channel, periodic opening of the vent valve may further reduce the likelihood of swelling in the single cells. The vent valve may also be opened after aging of the high-capacity battery to discharge gases generated during the aging process, thereby further extending the cycle life of the high-capacity battery.
(4) An explosion vent valve may be disposed on the first channel. In the event that any single cell undergoes thermal runaway, thermal runaway gases may be discharged through the first through hole and the first channel to an external thermal runaway gas treatment apparatus for timely treatment, thereby reducing the likelihood of more severe accidents.

As shown in FIGS. 5 and 6, in some embodiments, when the first through hole of the single cell is formed in the sidewall or the bottom of the single cell, in order to simultaneously achieve the functions (1), (2), (3), and (4) described above, a third through hole 21 may further be disposed in the top of the single cell. Accordingly, a second channel 18 may further be disposed on the top of the second cylindrical body 14, and the 2N second through holes 11 are arranged in two sides of the second channel 18. In this embodiment, the first channel performs functions (1) and (2), and the second channel performs functions (3) and (4).

### Embodiment 2

The specific implementation process of the manufacturing method for a high-capacity battery provided in this embodiment is as follows, as shown in FIG. 1:
In step 1, semi-finished single batteries without electrolyte injected therein are assembled.

The semi-finished single batteries are substantially the same as commercially available aluminum prismatic lithium-ion cells, except that the semi-finished single batteries have no electrolyte injected.

In step 2, a semi-finished high-capacity battery is assembled, including:
forming first through holes in a shell of each semi-finished single battery either before placing a plurality of semi-finished single batteries into a case or after placing the plurality of semi-finished single batteries into the case, such that an inner cavity of each semi-finished single battery is in communication with an inner cavity of the case, then connecting electrode terminals of the semi-finished single batteries extending out of the case in parallel, followed by sealing the case, thereby forming the semi-finished high-capacity battery.

In this step, before placing the plurality of semi-finished single batteries into the case, the first through holes are formed in the shell of each semi-finished single battery by directly breaching the shell of the semi-finished single battery to form the first through hole therein.

After placing the plurality of semi-finished single batteries into the case, the first through holes are formed in the shell of each semi-finished single battery in the following manner: each semi-finished single battery is provided with a sealed opening mechanism, and a dedicated tooling is used to open the sealed opening mechanism on the shell of each semi-finished single battery, such that a first through hole is formed in each semi-finished single battery. **In** this manner, the sealed opening mechanism adopted by the semi-finished single battery is a pull-ring sealing mechanism opened by means of a traction rope, as disclosed in Chinese Patent CN218525645U.

In this step, the process of sealing the case ensures that the interior of the case is isolated from the external environment. Therefore, in practice, at least the following two regions need to be sealed:
1. When the semi-finished single batteries are placed into the case, the case necessarily has an open end. Therefore, after all the semi-finished single batteries are placed into the case, the open end needs to be sealed.
2. Since the electrode terminals of the semi-finished single batteries in the semi-finished high-capacity battery are required to extend out of the top of the case, the region on the top of the case through which the electrode terminals extend also needs to be sealed.

In step 3, injection and formation are performed, including:
injecting electrolyte into the case such that the single cells are within a unified electrolyte system, followed by formation, thereby completing fabrication of the high-capacity battery.

In this process, the specific formation method is as follows:
The battery is charged at a constant current of 0.1C to 3.4 V, followed by switching to constant-voltage charging at 3.4 V until a cut-off current reaches 0.01C, and further standing for 30 minutes.

The battery is subsequently discharged at a constant current of 0.1C to 2.5 V, followed by standing for 30 minutes.

The battery is charged again at a constant current of 0.2C to 3.4 V, followed by switching to constant-voltage charging at 3.4 V until a cut-off current reaches 0.01C, and further standing for 30 minutes. Through the formation process, each single cell in the high-capacity battery forms a more stable SEI film, thereby enabling the high-capacity battery to exhibit more stable cycling performance.

In a preferred solution of the method above, a vacuum evacuation step is further performed before electrolyte injection and formation.

Since forming the first through hole in the semi-finished single batteries by opening the sealed opening mechanism is highly likely to generate aluminum debris, and impurities may be introduced during the sealing process of the case (generally performed by welding), such impurities may inevitably affect the performance of the high-capacity battery. The vacuum evacuation process may remove impurities from the inner cavity of the case and the inner cavities of the semi-finished single batteries. Furthermore, after vacuum evacuation, the inner cavity of the case and the inner cavities of the semi-finished single batteries are under negative pressure, which ensures smooth entry of electrolyte into the inner cavity of the case and the inner cavities of the semi-finished single batteries during subsequent electrolyte injection.

It is to be noted that the interface above used for vacuum evacuation and the interface used for electrolyte injection in Step 3 may be the same interface on the case, or may be two separate interfaces.

In some embodiments, after formation, the high-capacity battery may further undergo an aging treatment at 50°C for 48 hours. After aging, a degassing treatment may optionally be performed on the high-capacity battery to discharge gases generated during formation, thereby reducing the likelihood of swelling of the single cells in the high-capacity battery.

### Semi-finished single battery

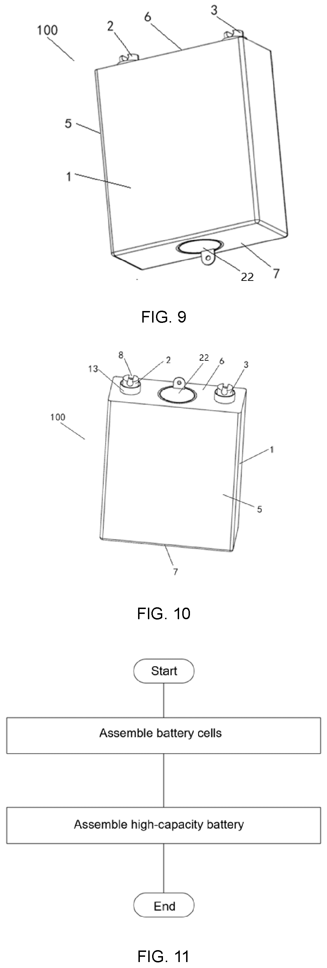

The semi-finished single batteries 100 employed in the method above may have any of the following three specific structures:
As shown in FIG. 9, the first type of semi-finished single battery 100 includes a shell 1 and an electrode assembly disposed in an inner cavity of the shell. The electrode assembly is formed by sequentially stacking a positive electrode, a separator, and a negative electrode, and is assembled by a stacking or winding process. The positive electrode of the electrode assembly is connected to a positive electrode terminal 2 on the top of the shell, and the negative electrode of the electrode assembly is connected to a negative electrode terminal 3 on the top of the shell. No electrolyte is injected into the inner cavity of the shell. An explosion vent membrane is disposed on the top of the shell.

Before assembling the semi-finished high-capacity battery, each semi-finished single battery needs to be provided, in a specific environment, with a first through hole in a sidewall or a bottom of the shell via a screwdriver or another sharp tool, such that the first through hole is in communication with the inner cavity of the semi-finished single battery. In this manner, during subsequent vacuum evacuation, the vacuum may act on the inner cavities of the semi-finished single batteries, and during electrolyte injection, the electrolyte may enter the inner cavities of the semi-finished single batteries.

Before assembling the semi-finished high-capacity battery, each semi-finished single battery needs to be provided, in a specific environment, with a first through hole in a sidewall or a bottom of the shell via a screwdriver or another sharp tool, such that the first through hole is in communication with the inner cavity of the semi-finished single battery. In this manner, during subsequent vacuum evacuation, the vacuum may act on the inner cavities of the semi-finished single batteries, and during electrolyte injection, the electrolyte may enter the inner cavities of the semi-finished single batteries.

After the semi-finished high-capacity battery is assembled from the semi-finished single batteries, the sealed opening mechanism 22 on the sidewall or the bottom of the shell is opened, in a specific environment, by means of an external force or by the electrolyte, such that a first through hole is formed in the shell of each single cell. In this manner, during subsequent vacuum evacuation, the vacuum may act on the inner cavities of the semi-finished single batteries, and during electrolyte injection, the electrolyte may enter the inner cavities of the semi-finished single batteries.

As shown in FIG. 11, the structure of the third type of semi-finished single battery 100 is similar to the structure of the second type of semi-finished single battery, except that the explosion vent membrane on the top of the shell 1 of the semi-finished single battery 100 is replaced with another sealed opening mechanism 22 (that is, the shell of the semi-finished single battery is provided with two sealed opening mechanisms 22), so as to form a third through hole in the semi-finished single battery.

The specific environment described above is preferably an environment having a dew point ranging from -25°C to 40°C, a humidity of ≤ 1%, a temperature of 23°C ± 2°C, and a cleanliness level of Class 100,000.

In addition, the shells of the two types of semi-finished single batteries described above each have two structural configurations, as shown in FIGS. 2 to 4.

The first type of shell 1 includes a first cylindrical body 5 and an upper cover plate 6. The first cylindrical body 5 has an upper open end and a lower closed end. During assembly of the semi-finished single battery, the positive electrode terminal and the negative electrode terminal of the upper cover plate 6 are first connected to the positive electrode and the negative electrode of the electrode assembly, respectively. The upper cover plate 6, together with the electrode assembly, is then placed as a single unit into the first cylindrical body through the upper open end thereof. Finally, the upper cover plate 6 is welded to the open end of the first cylindrical body 5.

The second type of shell includes a first cylindrical body 5, an upper cover plate 6, and a lower cover plate 7. The first cylindrical body 5 has both upper and lower ends open. During assembly of the semi-finished single battery, the lower cover plate 7 is first welded to the lower open end of the first cylindrical body. Then, the positive electrode terminal and the negative electrode terminal of the upper cover plate 6 are connected to the positive electrode and the negative electrode of the electrode assembly, respectively. Next, the upper cover plate 6, together with the electrode assembly, is placed as a single unit into the first cylindrical body through the upper open end of the first cylindrical body 5. Finally, the upper cover plate 6 is welded to the upper open end of the first cylindrical body 5.

When the shell 1 is provided with the sealed opening mechanism 22, the sealed opening mechanism 22 may be mounted in advance on a sidewall of the first cylindrical body 5, the lower cover plate 7, or the upper cover plate 6, and the semi-finished single battery is then assembled.

It is to be emphasized that the shell of the semi-finished single battery is made of aluminum, that is, the first cylindrical body 5, the upper cover plate 6, and the lower cover plate 7 are all fabricated from aluminum.

In other embodiments, grooves 8 for clamping a heat transfer pipe may be formed in the positive electrode terminal and the negative electrode terminal of the semi-finished single battery 100. The heat transfer pipe may be a liquid cooling pipe or a heat pipe, configured to conduct current from the positive electrode terminal and the negative electrode terminal. Therefore, it is necessary to ensure that the heat transfer pipe itself and the medium inside the heat transfer pipe are insulated from external equipment.

### High-capacity battery

On the basis of the description above of the structure of the semi-finished single battery 100, the structure of the high-capacity battery 200 assembled using the method above and the semi-finished single batteries is described below:
As shown in FIG. 4, the high-capacity battery 200 includes a case 9 and N single cells 10. The N single cells 10 are disposed in parallel within the case 9. First through holes are disposed in a shell 1 of each single cell. Electrolyte injection ports (not shown in the drawing) are disposed in the case 9. Second through holes 11 for positive electrode terminals and negative electrode terminals of the battery cells 10 to extend therethrough are disposed on a top of the case 9, and the top region of the case 9 corresponding to each second through hole 11 is fixedly sealed to the top of the shell of the single cell 10 corresponding to the second through hole 11. The electrolyte in each single cell 10 is in communication with the electrolyte within the case 9, such that the battery cells are within a shared electrolyte system.

In this embodiment, since the positive electrode terminal and the negative electrode terminal of the single cells 10 extend through the top of the case, a heat transfer pipe may be disposed on the grooves 8 of the positive electrode terminals of all the single cells 10, and another heat transfer pipe may be disposed on the grooves 8 of the negative electrode terminals of all the single cells. An external temperature control apparatus is connected to two heat transfer pipes, enabling temperature control of the high-capacity battery (i.e., heating or cooling the high-capacity battery).

It is to be noted that the positive electrode terminal and the negative electrode terminal described above, in which the grooves 8 are formed, may be the electrode terminals of the semi-finished single batteries themselves, or an electrode terminal adapter member 12 fixedly connected to the electrode terminals, with the grooves formed in the electrode terminal adapter member 12.

In this embodiment, the case 9 is made of aluminum.

A top region of the case corresponding to each second through hole described above and the top of the shell of the single cell corresponding to the second through hole may be fixedly sealed in either of the following two methods:
1. A sealing connector is additionally disposed between the top region of the case 9 corresponding to the second through hole 11 and the upper cover plate of the single cell 10 corresponding to the second through hole to achieve sealing. Referring to FIGS. 4 and 11, the sealing connector includes a hollow component 13, the bottom of the hollow component 13 is configured for sealing connection to a first region of the single cell 10, and the top of the hollow component 13 is configured for sealing connection to a second region of the case 9. The first region is the region surrounding any electrode terminal on the upper cover plate of any single cell 10, and the second region is the region on the top of the case 9 corresponding to any second through hole 11. The region corresponding to the second through hole 11 is the region on the outer surface of the case 9 surrounding any second through hole 11, or the region corresponding to the second through hole 11 is the wall of the second through hole. The region surrounding the electrode terminal is the region surrounding an insulating sealing gasket on the electrode terminal. The insulating sealing gasket is a component on the single cell configured to insulate the electrode terminal from the upper cover plate of the single cell.
2. The region of the case 9 surrounding the second through hole 11 may be directly fixedly sealed to the region of the upper cover plate surrounding the electrode terminal of the single cell by laser welding. This method is generally used when the single cells within the case have relatively consistent dimensions in the height direction.

The case structure may have the following configurations:
1. Referring to FIGS. 5 and 11, the case 9 includes a second cylindrical body 14, a first cover plate 15, and a second cover plate 16. The top and bottom of the second cylindrical body 14 are open, with a first cover plate 15 hermetically sealed (welded) to the top of the second cylindrical body 14, and the second cover plate 16 sealingly fixed (welded) to the bottom of the second cylindrical body 14. 2N second through holes 11 are formed in the first cover plate 15.

In an embodiment, to allow the electrolyte to smoothly enter the case 9 and the inner cavities of the semi-finished single batteries 100 during the electrolyte injection, a first channel 17 extending along the arrangement direction of the single cells and corresponding to the first through holes in the shell of the single cell may be formed on the sidewall of the second cylindrical body 14 or on the second cover plate 16, according to the positions of the first through holes in the shell of the single cell 10. When the first channel 17 is provided, the electrolyte injection port is disposed in the region of the case 9 corresponding to either end of the first channel 17, and the electrolyte injection port may simultaneously serve as an interface for a vacuum device and an electrolyte injection device.

In an embodiment, the first cover plate 15 may further be provided with a second channel 18, and the 2N second through holes 11 are arranged in two sides of the second channel 18. When the top of each semi-finished single battery is provided with an explosion vent membrane (i.e., when the second type of semi-finished single battery above is adopted), and the second channel 18 covers the explosion vent membranes of the single cells, the second channel serves as an explosion vent channel. When a third through hole is formed in the top of each semi-finished single battery (i.e., when the third type of semi-finished single battery above is adopted), the second channel 18 is configured to be in communication with the inner cavities of the single cells and serves as a gas balancing chamber for the single cells. Moreover, a vent valve may be disposed on the second channel 18. By periodically opening the vent valve, the likelihood of swelling of the single cells may be further reduced. In addition, the vent valve may also be opened after aging of the high-capacity battery to discharge gases generated during the aging process.

2. Referring to FIGS. 6 and 7, the case 9 includes a second cylindrical body 14, a third cover plate 19, and a fourth cover plate 20. Both the front portion and the rear portion of the second cylindrical body 14 are open. The third cover plate 19 is hermetically sealed (welded) to the front portion of the second cylindrical body 14, and the fourth cover plate 20 is hermetically sealed (welded) to the rear portion of the second cylindrical body 14. 2N second through holes 11 are formed in the top of the second cylindrical body 14.

In an embodiment, to allow the electrolyte to smoothly enter the case 9 and the inner cavities of the semi-finished single batteries 100 during the electrolyte injection, a first channel extending along the arrangement direction of the single cells and corresponding to the first through holes in the shell of the single cell may be formed on the sidewall or bottom of the second cylindrical body 14, according to the positions of the first through holes in the shell of the single cell. When the first channel 17 is provided, the electrolyte injection port is disposed in the third cover plate 19 or the fourth cover plate 20, and the electrolyte injection port may simultaneously serve as an interface for a vacuum device and an electrolyte injection device.

In an embodiment, a second channel 18 may further be disposed in the top of the second cylindrical body, and the 2N second through holes 11 are arranged in two sides of the second channel 18. When the top of each semi-finished single battery is provided with an explosion vent membrane (i.e., when the second type of semi-finished single battery above is adopted), and the second channel 18 covers the explosion vent membranes of the single cells, the second channel 18 serves as an explosion vent channel. When a third through hole is formed in the top of each semi-finished single battery (i.e., when the third type of semi-finished single battery above is adopted), the second channel 18 is configured to be in communication with the inner cavities of the single cells and serves as a gas balancing chamber for the single cells. Moreover, a vent valve may be disposed on the second channel 18. By periodically opening the vent valve, the likelihood of swelling of the single cells may be further reduced. In addition, the vent valve may also be opened after aging of the high-capacity battery to discharge gases generated during the aging process.

### Embodiment 3

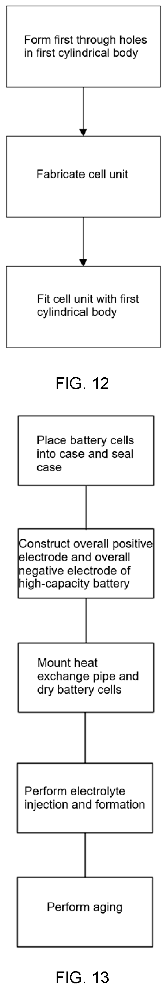

The specific implementation process of the manufacturing method for a high-capacity battery provided in this embodiment is as follows, as shown in FIG. 12:
As shown in FIG. 13, in step 1, battery cells 300 are assembled.

A first through hole 4 is formed in the first cylindrical body 5 having an open top. The first through hole 4 may be disposed in a sidewall or a bottom of the first cylindrical body 5, provided that, when assembling the high-capacity battery, the electrolytes within the battery cells may communicate with one another.

The upper cover assembly 23 and the bare cell 24 are connected by welding to form a cell unit 25. Specifically, in this step, the positive electrode tab of the bare cell 24 is connected to the positive electrode of the upper cover assembly 23 by welding, and the negative electrode tab of the bare cell 24 is connected to the negative electrode of the upper cover assembly 23 by welding.

The bare cell 24 of the cell unit 25 is placed into the first cylindrical body 5, and the periphery of the upper cover assembly 23 is fixed to the periphery of the open end of the first cylindrical body 5 by partial connection, thereby completing fabrication of the battery cell 300. In this case, no electrolyte is injected into the battery cell 300. The partial connection may be achieved by spot welding, riveting, or screw fastening. In consideration of improved working efficiency and connection reliability, spot welding is adopted in this embodiment to accomplish the partial connection.

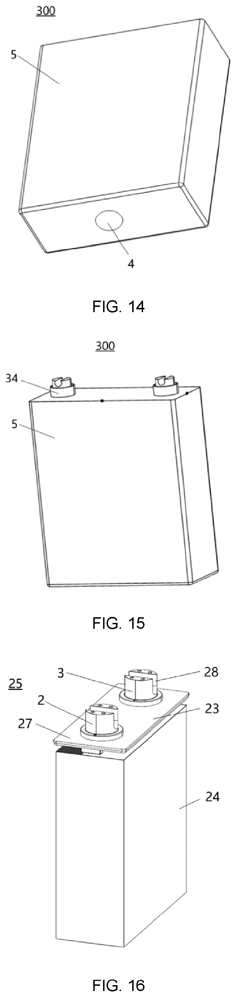

As shown in FIG. 14, in step 2, a high-capacity battery 200 is assembled.

In step 2.1, the plurality of battery cells 300 fabricated according to step 1 are placed into the case 9, ensuring that inner cavities of the battery cells 300 are in communication with the inner cavity of the case 9 via the first through hole 2, while positive electrode terminals 2 and negative electrode terminals 3 of the battery cells 300 extend out of the top of the case 9, followed by sealing the case 9.

In step 2.2, electrolyte is injected into the case 9 such that the battery cells are within a unified electrolyte system, followed by formation, thereby completing fabrication of the high-capacity battery.

In this step 2.1, the process of sealing the case 9 ensures that the interior of the case 9 is isolated from the external environment.

Therefore, in practice, at least the following two regions need to be sealed:
1. When the battery cells are placed into the case, the case necessarily has an open end. Therefore, after all the battery cells are placed into the case, the open end needs to be sealed.
2. Since the polarity terminals of the battery cells in the high-capacity battery are required to extend out of the top of the case, the region on the top of the case through which the polarity terminals extend also needs to be sealed.

In step 2.2, the specific formation method is as follows:
The battery is charged at a constant current of 0.1C to 3.4 V, followed by switching to constant-voltage charging at 3.4 V until a cut-off current reaches 0.01C, and further standing for 30 minutes.

The battery is subsequently discharged at a constant current of 0.1C to 2.5 V, followed by standing for 30 minutes.

The battery is charged again at a constant current of 0.2C to 3.4 V, followed by switching to constant-voltage charging at 3.4 V until a cut-off current reaches 0.01C, and further standing for 30 minutes. Through the formation process, each single cell in the high-capacity battery forms a more stable SEI film, thereby enabling the high-capacity battery to exhibit more stable cycling performance.

Steps 1 and 2 described above are required to be performed in a specific environment, which is preferably an environment having a dew point ranging from -25°C to 40°C, a humidity of ≤ 1%, a temperature of 23°C ± 2°C, and a cleanliness level of Class 100,000.

During the fabrication process of the high-capacity battery, the method further includes a step of constructing an overall positive electrode and an overall negative electrode of the high-capacity battery. In particular, portions of the positive electrode terminals of the battery cells extending out of a top of the case are electrically connected to form the overall positive electrode of the high-capacity battery, and portions of the negative electrode terminals of the battery cells extending out of the top of the case are electrically connected to form the overall negative electrode of the high-capacity battery.

This step may be performed before electrolyte injection or after electrolyte injection. In this embodiment, since, in a conventional battery fabrication process, the battery needs to be baked before electrolyte injection to remove moisture from the bare cells, the step of constructing the overall positive electrode and the overall negative electrode of the high-capacity battery may be performed before step 2.2 (electrolyte injection). In this way, at least one heat exchange pipe may be clamped onto the overall positive electrode and/or the overall negative electrode of the high-capacity battery, and the battery cells are subjected to drying and heating via the heat exchange pipe. After the drying and heating process, a vacuum evacuation process is performed on the interior of the case. During the fabrication of the high-capacity battery, the heat exchange pipe may directly heat the battery cells to control the moisture content within the bare cell. Compared with conventional vacuum baking methods, this eliminates the need for a dedicated vacuum oven, thereby reducing the fabrication cost of the high-capacity battery and enhancing fabrication efficiency of the high-capacity battery. To extract gases generated during drying within the case and to further facilitate electrolyte injection. During the drying process, vacuum evacuation may not only allow water vapor evaporated from the bare cells to be discharged in a timely manner, but also remove impurities from the inner cavity of the case 9 and the inner cavities of the battery cells 300. Furthermore, after vacuum evacuation, both the interior of the case 9 and the inner cavities of the battery cells 300 are under negative pressure, thereby ensuring that, during subsequent electrolyte injection, the electrolyte may smoothly enter the inner cavity of the case 9 and the inner cavities of the battery cells 300.

In some embodiments, after formation, the high-capacity battery may further undergo an aging treatment at 50°C for 48 hours. After aging, a degassing treatment may optionally be performed on the high-capacity battery to discharge gases generated during formation, thereby reducing the likelihood of swelling of the single cells in the high-capacity battery.

### Battery cell

As shown in FIGS. 15 to 18, the battery cell 300 includes a first cylindrical body 5 and a cell unit 25. The cell unit 25 includes an upper cover assembly 23 and a bare cell 24. The bare cell 24 includes a positive electrode tab, a separator, and a negative electrode tab arranged in sequence, and is assembled by a stacking process or a winding process.

The upper cover assembly 23 includes a cover plate body 27, a positive electrode terminal 2, and a negative electrode terminal 3. The positive electrode terminal 2 and the negative electrode terminal 3 are fixed to the cover plate body 27 in an insulated manner. A portion of each of the positive electrode terminal 2 and the negative electrode terminal 3 extends out of one side of the cover plate body 27, and another portion of each of the positive electrode terminal 2 and the negative electrode terminal 3 extends out of another side of the cover plate body 27 and is connected to the positive electrode tab and the negative electrode tab of the bare cell 24. A top of a first cylindrical body 5 is open, and first through holes 4 are formed in a sidewall or a bottom of the first cylindrical body 5. The bare cell 24 is located within the first cylindrical body 5, and an edge of the cover plate body 27 is fixed to a periphery of an open end of the first cylindrical body 5 by spot welding. The spot welding is performed at least two regions (preferably at four corners respectively; the black dots in FIG. 5 indicate the spot welding regions), such that a gap is formed between the open end of the first cylindrical body 5 and the upper cover assembly 23. No electrolyte is injected into the inner cavities of the battery cells 300.

Since the first cylindrical body 5 of the battery cell 300 above is provided with a first through hole 4, it is necessary, before assembling the battery cells 300 into the high-capacity battery 200 or during storage and transportation, to ensure that the bare cell of the battery cell 300 is not corroded by the external environment. Therefore, the first through hole 4 of the battery cell 300 may be sealed by film heat sealing.

If film heat sealing is not employed, the storage area for the battery cells is required to be maintained in a specific environment, and during transportation, the battery cells are to be placed in a transport container that provides the same specific environment.

To further enhance the fabrication efficiency of the high-capacity battery, a preferred method is to sequentially assemble the battery cells and the high-capacity battery within a cleanroom providing the specific environment described above.

It is to be emphasized that both the first cylindrical body 5 and the cover plate body 27 of the battery cell 300 are made of aluminum. Furthermore, the first through hole 4 is formed in advance in the bottom and the sidewall of the first cylindrical body 5 before assembling the battery cell 300.

The structural configuration of the battery cell 300 is substantially the same as the structural configuration of a conventional commercially available prismatic aluminum lithium-ion battery, except that no electrolyte is injected into the battery cell 300, the upper cover assembly 23 does not need to be provided with an electrolyte injection portion or an explosion vent membrane, and the upper cover assembly 23 and the first cylindrical body 5 are fixed by spot welding. On the basis of the differences above, compared with a conventional commercially available prismatic aluminum lithium-ion battery, the battery cell of this embodiment may omit the electrolyte injection, formation, and aging steps during the fabrication process. Moreover, the welding process between the cover plate body 27 and the first cylindrical body 5 is changed from full welding to spot welding, thereby shortening the welding time. In addition, since a gap is formed between the open end of the first cylindrical body 5 and the upper cover assembly 23, the airtightness testing step for the battery cell may be omitted. In summary, the battery cell features a simple structure and a simplified fabrication process, which reduces its fabrication cost and, consequently, lowers the overall cost of the high-capacity battery.

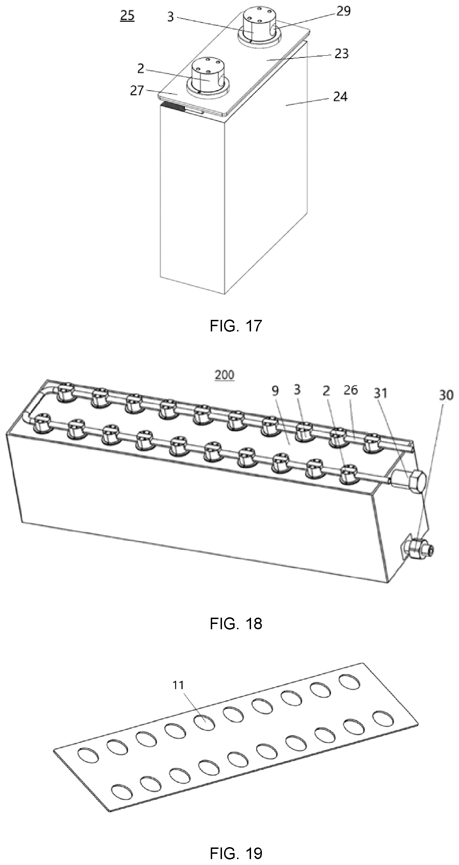

In this embodiment, the positive electrode terminal 2 and the negative electrode terminal 3 described above are provided with mounting portions configured for mounting heat exchange pipes. The mounting portion may have the following two structural configurations:
1. As shown in FIG. 17, a first groove 28 is formed in each of the positive electrode terminal 2 and the negative electrode terminal 3. The cross-section of the first groove 28 is preferably C-shaped, and an open end of the C-shape has a certain flexibility to tightly clamp the heat exchange pipe therein.
2. As shown in FIG. 18, a through opening 29 is formed in each of the positive electrode terminal 2 and the negative electrode terminal 3, and the heat exchange pipe is inserted through the through opening 29 by a transition fit or an interference fit.

In the two configurations above, as compared with the through opening 29 configuration, the first groove 28 configuration facilitates easier mounting of the heat exchange pipe; whereas, as compared with the first groove 28 configuration, the through opening 29 configuration provides a larger contact area between the heat exchange pipe and the electrode terminals, thereby achieving a better heat transfer effect.

Since the positive electrode terminal 2 and the negative electrode terminal 3 are energized, insulation needs to be provided between the heat exchange pipe 26 and the positive electrode terminal 2, and between the heat exchange pipe and the negative electrode terminal 3 to ensure safety.

### High-capacity battery

On the basis of the description above of the structure of the battery cell 300, the structure of the high-capacity battery 200 assembled using the method above and the battery cells is described below:
As shown in FIG. 19, the high-capacity battery 200 includes a case 9 and N battery cells 300. A first interface 30 is disposed in the case 9. Second through holes 11 for positive electrode terminals 2 and negative electrode terminals 3 of the battery cells to extend therethrough are disposed in a top of the case 9. The battery cells 300 are placed side by side within the case 9, and the positive electrode terminals 2 and the negative electrode terminals 3 of the battery cells 300 extend through the corresponding second through holes 11, with the second through holes 11 being sealed with the corresponding positive electrode terminals 2 or negative electrode terminals 3 of the battery cells. Portions of the positive electrode terminals 2 of the battery cells extending out of the second through holes 11 are electrically connected to form an overall positive electrode of the high-capacity battery. Portions of the negative electrode terminals of the battery cells extending out of the second through holes 11 are electrically connected to form an overall negative electrode of the high-capacity battery. The battery cells 300 are in communication with an interior of the case 9 via first through holes 4 in a first cylindrical body 5, such that the battery cells are within a shared electrolyte system.

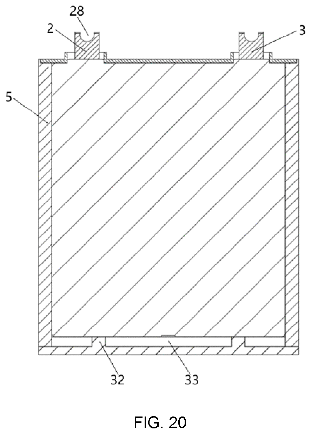

The case 9 is made of an aluminum material. The case structure may have the following configurations:
1. Referring to FIGS. 19 and 20, the case 9 includes a housing, a top plate, and a bottom plate. Both the top and the bottom of the housing are open. The top plate is hermetically fixed (welded) to the top of the housing, and the bottom plate is hermetically fixed to the bottom of the housing. 2N second through holes 11 are formed in the top plate. In this cylindrical body structure, the first interface 30 is mounted at either one of two ends of the housing.
2. Referring to FIGS. 19 and 20, the case 9 includes a housing and two end plates. Both a front end and a rear end of the housing are open, and the two end plates are hermetically fixed (welded) to the two ends of the housing. 2N second through holes 11 are formed in the top of the housing. In this cylindrical body structure, the first interface 30 is mounted on one of the two end plates.

The first interface 30 has the following functions:
After being connected to an electrolyte injection and replacement device for performing electrolyte injection or replacement on the high-capacity battery, or it may be connected to a vacuum device to perform vacuum evacuation on the high-capacity battery. Alternatively, an explosion vent valve may be disposed, or a sealed plug may be disposed.

In this embodiment, the case further includes a second interface 31, the second interface 31 being disposed at a position in the end plates 9 close to a top of the case 9 or being disposed in the top of the case 9. The second interface 31 may be provided with a vent valve, which may periodically release gases generated within the high-capacity battery during operation, thereby reducing the likelihood of swelling in the battery cells and further lowering the risk of thermal runaway in the high-capacity battery. In addition, the vent valve may also be opened after aging of the high-capacity battery to discharge gases generated during the aging process, thereby further enhancing a cycle life of the high-capacity battery.

In addition, in this embodiment, as shown in FIG. 20, two spacer plates 32 extending along an arrangement direction of the battery cells are disposed on an inner bottom surface of the case 9. An electrolyte channel 33 is formed between the two spacer plates 32, and the electrolyte channel 33 is in communication with an electrolyte region of each battery cell. The spacer plate design has the following two advantages:
1. When the spacer plates 32 are in contact with the bottom surfaces of the battery cells 300, as compared with direct contact between the inner bottom surface of the case and the bottom surfaces of the battery cells, flatness is more easily ensured. That is, when the polarity terminals of the battery cells extend through the top plate, protruding heights thereof may be maintained substantially consistent, and the polarity terminals of the battery cells may reliably extend out of the top of the case.
2. The electrolyte channel 33 formed between the two spacer plates 32 enables better continuity of electrolyte liquid levels among the battery cells, avoiding occurrence of electrolyte interruption.

In this embodiment, the positive electrode terminals 2 and the negative electrode terminals 3 of the battery cells 300 extend through the top of the case 9, and mounting portions for the heat exchange pipes 26 are disposed on the positive electrode terminals and the negative electrode terminals. Therefore, an overall positive electrode and an overall negative electrode of the high-capacity battery perform heat exchange with an external temperature control apparatus via at least one heat exchange pipe, thereby realizing temperature control of the high-capacity battery, that is, heating or cooling the high-capacity battery.

As shown in FIG. 19, the heat exchange pipe 26 may adopt the following configurations:
1. A single aluminum pipe is bent into a U-shaped structure, and two parallel pipe segments are matched with the overall positive electrode and the overall negative electrode of the high-capacity battery, respectively, thereby realizing heat exchange between each battery cell and an external temperature control apparatus. An inlet port and an outlet port of the aluminum pipe are located on the same side. A heat transfer medium in the aluminum pipe may be water, insulating oil, or a fluorinated liquid. Alternatively, two aluminum pipes may be used and matched with the overall positive electrode and the overall negative electrode, respectively.
2. Two wick-type heat pipes are matched with the overall positive electrode and the overall negative electrode, respectively, thereby realizing heat exchange between each battery cell and the external temperature control apparatus. Each wick-type heat pipe is an evaporation-condensation heat exchange device, which transfers heat by phase change of a working medium within the pipe.

Since heat transfer effect of a wick-type heat pipe is affected by a length thereof, when a number of battery cells in the high-capacity battery is relatively large (i.e., a length of the high-capacity battery is relatively great), application of the wick-type heat pipe is limited. Therefore, in this embodiment, an aluminum pipe is preferably selected as the heat exchange pipe. If effective insulation between the heat exchange pipe and the electrode terminals may be ensured, water is preferably used as a heat transfer medium flowing within the aluminum pipe in view of heat transfer efficiency, cost, and the like.

In this embodiment, sealing between the second through hole 11 and a corresponding positive electrode terminal or negative electrode terminal of the battery cell may be implemented in the following three manners:
1. As shown in FIG. 16, a hollow component 34 is additionally disposed between a top region of the case 9 corresponding to the second through hole 11 and an upper cover assembly of the battery cell corresponding to the second through hole 11, so as to achieve sealing. The hollow component 34 is sleeved on a polarity terminal of the battery cell 300. A bottom of the hollow component 34 is configured to be welded to the upper cover assembly of the battery cell, and a top of the hollow component is welded to the case.
2. A region of the case 9 surrounding the second through hole 11 may be directly fixedly sealed to a region surrounding a polarity terminal of the upper cover assembly of the battery cell, thereby achieving fixed sealing. This method is generally used when the single cells within the case have relatively consistent dimensions in the height direction.
3. An insulating sealing adhesive layer that does not react with the electrolyte may be directly filled into a gap between the second through hole 11 and the polarity terminal of the battery cell.

## Claims

1. A manufacturing method for a high-capacity battery, comprising the following steps:
assembling semi-finished single batteries without electrolyte injected therein;
assembling a semi-finished high-capacity battery:
placing a plurality of semi-finished single batteries into a case, wherein inner cavities of the semi-finished single batteries are in communication with an inner cavity of the case via at least one first through hole; sealing the case, and connecting electrode terminals of the semi-finished single batteries extending out of the case in parallel, thereby forming the semi-finished high-capacity battery,
wherein the first through hole is preformed in a shell of each semi-finished single battery, or the first through hole is formed in a shell of each semi-finished single battery before the plurality of semi-finished single batteries are placed into the case or after the plurality of semi-finished single batteries are placed into the case; and
performing electrolyte injection and formation:
injecting electrolyte into the semi-finished high-capacity battery such that the single cells are within a unified electrolyte system, followed by formation, thereby completing fabrication of the high-capacity battery.

2. The manufacturing method for a high-capacity battery as claimed in claim 1, further comprising a step of performing vacuum evacuation on the semi-finished high-capacity battery.

3. The manufacturing method for a high-capacity battery as claimed in claim 1 or 2, further comprising aging the high-capacity battery after formation.

4. A semi-finished single battery, applied in the manufacturing method for a high-capacity battery as claimed in any one of claims 1 to 3,
wherein the semi-finished single battery comprises a shell, a positive electrode terminal, a negative electrode terminal, and an electrode assembly; and
the positive electrode terminal and the negative electrode terminal are fixed to a top plate of the shell in an insulated manner; a portion of each of the positive electrode terminal and the negative electrode terminal extends out of a top of the shell; another portion of each of the positive electrode terminal and the negative electrode terminal extends into the shell and is connected to the electrode assembly disposed within the shell; no electrolyte is injected into the shell; and at least one first through hole is disposed in the shell.

5. The semi-finished single battery as claimed in claim 4, wherein at least one first through hole is disposed in a top of the shell.

6. The semi-finished single battery as claimed in claim 4, wherein at least one first through hole is disposed in a bottom or a sidewall of the shell, and a third through hole is disposed in a top of the shell.

7. A semi-finished single battery, applied in the manufacturing method for a high-capacity battery as claimed in any one of claims 1 to 3,
wherein the semi-finished single battery comprises a shell, a positive electrode terminal, a negative electrode terminal, and an electrode assembly; and
the positive electrode terminal and the negative electrode terminal are fixed to a top plate of the shell in an insulated manner; a portion of each of the positive electrode terminal and the negative electrode terminal extends out of a top of the shell; another portion of each of the positive electrode terminal and the negative electrode terminal extends into the shell and is connected to the electrode assembly disposed within the shell; and no electrolyte is injected into the shell.

8. The semi-finished single battery as claimed in claim 7, wherein at least one sealed opening mechanism is disposed on the shell.

9. The semi-finished single battery as claimed in claim 8, wherein two sealed opening mechanisms are provided, one sealed opening mechanism being disposed on a sidewall in a thickness direction of the shell or at a bottom of the shell, and the other sealed opening mechanism being disposed on a top of the shell.

10. A manufacturing method for a high-capacity battery, comprising the following steps:
assembling battery cells:
forming a first through hole in a first cylindrical body having a top opening;
connecting an upper cover assembly and a bare cell by welding to form a cell unit; and
placing the bare cell of the cell unit into the first cylindrical body, and fixing a periphery of the upper cover assembly to a periphery of an open end of the first cylindrical body by partial connection, ensuring that a gap is formed between the periphery of the upper cover assembly and the periphery of the open end of the first cylindrical body, thereby completing fabrication of the battery cells; and
assembling a high-capacity battery:
placing a plurality of battery cells into a case, ensuring that inner cavities of the battery cells are in communication with an inner cavity of the case via the first through hole, while positive electrode terminals and negative electrode terminals of the battery cells extend out of a top of the case, followed by sealing the case; and
injecting electrolyte into the case such that the battery cells are within a unified electrolyte system, followed by formation, thereby completing fabrication of the high-capacity battery.

11. The manufacturing method for a high-capacity battery as claimed in claim 10, further comprising electrically connecting portions of the positive electrode terminals of the battery cells extending out of a top of the case to form an overall positive electrode of the high-capacity battery, and electrically connecting portions of the negative electrode terminals of the battery cells extending out of the top of the case to form an overall negative electrode of the high-capacity battery.

12. The manufacturing method for a high-capacity battery as claimed in claim 11, further comprising, before electrolyte injection, a step of clamping at least one heat exchange pipe onto the overall positive electrode and the overall negative electrode of the high-capacity battery, and drying and heating the battery cells via the heat exchange pipe, and a step of performing vacuum evacuation on an interior of the case during the drying and heating process.

13. The manufacturing method for a high-capacity battery as claimed in any one of claims 10 to 12, further comprising aging the high-capacity battery after formation.

14. A battery cell, applied in the manufacturing method for a high-capacity battery as claimed in claim 10, wherein the battery cell comprises a cell unit and a cylindrical body;
the cell unit comprises an upper cover assembly and a bare cell;
the upper cover assembly comprises a cover plate body, a positive electrode terminal, and a negative electrode terminal;
the positive electrode terminal and the negative electrode terminal are fixed to the cover plate body in an insulated manner; a portion of each of the positive electrode terminal and the negative electrode terminal extends out of one side of the cover plate body, and another portion of each of the positive electrode terminal and the negative electrode terminal extends out of another side of the cover plate body and is connected to the bare cell;
a top of a first cylindrical body is open, and first through holes are formed in a sidewall or a bottom of the first cylindrical body; and
the bare cell is located within the first cylindrical body, and an edge of the cover plate body and a periphery of an open end of the first cylindrical body are fixed by partial connection such that a gap is formed between the open end of the first cylindrical body and the upper cover assembly.

15. The battery cell as claimed in claim 14, wherein the positive electrode terminal and the negative electrode terminal are provided with mounting portions configured for mounting heat exchange pipes.

16. A high-capacity battery, comprising a case and a plurality of battery cells as claimed in claim 14, wherein
a first interface is disposed in the case; second through holes for positive electrode terminals and negative electrode terminals of the battery cells to extend therethrough are disposed on a top of the case;
the battery cells are placed side by side within the case, and the positive electrode terminals and the negative electrode terminals of the battery cells extend through the corresponding second through holes, with the second through holes being sealed with the corresponding positive electrode terminals or negative electrode terminals of the battery cells;
portions of the positive electrode terminals of the battery cells extending out of the second through holes are electrically connected to form an overall positive electrode of the high-capacity battery, and portions of the negative electrode terminals of the battery cells extending out of the second through holes are electrically connected to form an overall negative electrode of the high-capacity battery; and
the battery cells are in communication with an interior of the case via first through holes in a cylindrical body, such that the battery cells are within a shared electrolyte system.

17. The high-capacity battery as claimed in claim 16, wherein the case comprises a housing and end plates fixedly sealed at two ends of the housing, and the first interface is disposed in the end plate.

18. The high-capacity battery as claimed in claim 16 or 17, wherein the case further comprises a second interface, the second interface being disposed at a position in the end plates close to a top of the case or being disposed in the top of the case.

19. The high-capacity battery as claimed in claim 18, wherein the overall positive electrode and the overall negative electrode perform heat exchange with an external temperature control apparatus via at least one heat transfer pipe.
